# EUROPÄISCHE PATENTANMELDUNG

(11) **EP 4 628 330 A1**
(43) Veröffentlichungstag der Anmeldung: **08.10.2025**
(21) Anmeldenummer: 24168278.0
(22) Anmeldetag: 03.04.2024
(51) Int. Cl.: B60D 1/06, B60D 1/58

(54) **KUPPLUNGSANORDNUNG**

(71) Anmelder: Walterscheid GmbH, 53797 Lohmar (DE)
(72) Erfinder: VON AHLEN, Daniel, 51069 Köln (DE); THIEL, Manuel, 53797 Lohmar (DE); HECTOR, Martin, 53721 Siegburg (DE)
(74) Vertreter: Neumann Müller Oberwalleney Patentanwälte PartG mbB

(57) **Zusammenfassung**

Kupplungsanordnung umfassend:
eine Kupplungskugel (1) mit einem Kugelabschnitt (5) und einem Schulterabschnitt (6), die entlang einer Längsachse (L) zentriert zueinander angeordnet sind,
einen Faltenbalg (15), der um die Kupplungskugel (1) angeordnet ist,
einen schulterseitigen Anschluss (16) des Faltenbalgs (15), der an dem Schulterabschnitt (6) der Kupplungskugel (1) und/oder an einem Kugelträger (2), an dem die Kupplungskugel (1) befestigt ist, dichtend anliegt, und
einen kugelseitigen Anschluss (17) des Faltenbalgs (15), der ausgebildet ist, um in einem mit der Kupplungskugel (1) gekuppelten Zustand eines Kuppelelements (3, 23) am Kuppelelement (3, 23) dichtend anzuliegen,
wobei der kugelseitige Anschluss (17) des Faltenbalgs (15) in einem vom Kugelabschnitt (5) der Kupplungskugel (1) abgekuppelten Zustand des Kuppelelements (3, 23) am Kugelabschnitt (5) dichtend anliegt.

## Beschreibung

Die Erfindung betrifft eine Kupplungsanordnung, die eine Kupplungskugel mit einem Kugelabschnitt und einem Schulterabschnitt, die entlang einer Längsachse zentriert zueinander angeordnet sind, umfasst. Um die Kupplungskugel ist ein Faltenbalg angeordnet. Die Kupplungsanordnung umfasst ferner einen schulterseitigen Anschluss des Faltenbalgs, der an dem Schulterabschnitt der Kupplungskugel und/oder an einem Kugelträger, an dem die Kupplungskugel befestigt ist, dichtend anliegt, sowie einen kugelseitigen Anschluss des Faltenbalgs, der ausgebildet ist, um in einem mit der Kupplungskugel gekuppelten Zustand eines Kuppelelements am Kuppelelement dichtend anzuliegen.

Eine solche Kupplungsanordnung ist aus der DE 929 107 C als Anhängerkupplung für Kraftfahrzeuge bekannt. Dort dient eine Manschette in Form eines Faltenbalgs zum Abdichten. Die Manschette ist mittels eines Sprengrings am Kuppelelement befestigt. Mit einem unteren Wulst liegt die Manschette gegen den Schulterabschnitt der Kupplungskugel an. Somit verbleibt die Manschette am Kuppelelement, wenn das Kuppelelement von der Kupplungskugel abgekuppelt wird. Schmiermittel, das zum Schmieren der Oberfläche des Kugelabschnitts ggf. innerhalb der Manschette angeordnet ist, kann somit entweichen und verunreinigt werden.

EP 1 369 266 A1 offenbart eine Kupplungsvorrichtung zwischen einem Zugfahrzeug und einem Anhänger mit einer auf einem Kupplungsträger des Zugfahrzeuges angeordneten Kupplungskugel und einer die Kupplungskugel von oben umfassenden, anhängerseitigen Kugelpfanne. Zwischen dem Pfannenrand der Kugelpfanne und dem Kupplungsträger der Kupplungskugel ist ein elastisch verformbarer Dichtungsring unter Vorspannung angeordnet, wobei der Dichtungsring vollflächig an der Kupplungskugel anliegt.

Aufgabe der vorliegenden Erfindung ist es, eine Kupplungsanordnung bereitzustellen, bei der ein Dichtelement sowohl in einem mit der Kupplungskugel gekuppelten Zustand eines Kuppelelements als auch in einem entkuppelten Zustand nach außen abgedichtet ist.

Die Aufgabe wird durch eine Kupplungsanordnung gelöst, die eine Kupplungskugel mit einem Kugelabschnitt und einem Schulterabschnitt, die entlang einer Längsachse zentriert zueinander angeordnet sind, umfasst. Um die Kupplungskugel ist ein Faltenbalg angeordnet. Die Kupplungsanordnung umfasse ferner einen schulterseitigen Anschluss des Faltenbalgs, der an dem Schulterabschnitt der Kupplungskugel und/oder an einem Kugelträger, an dem die Kupplungskugel befestigt ist, dichtend anliegt, sowie einen kugelseitigen Anschluss des Faltenbalgs, der ausgebildet ist, um in einem mit der Kupplungskugel gekuppelten Zustand eines Kuppelelements am Kuppelelement dichtend anzuliegen. In einem von der Kupplungskugel abgekuppelten Zustand des Kuppelelements liegt der kugelseitige Anschluss des Faltenbalgs am Kugelabschnitt dichtend an.

Somit ist gewährleistet, dass das Innere des Faltenbalgs sowohl in einem mit der Kupplungskugel gekuppelten Zustand eines Kuppelelements als auch in einem von der Kupplungskugel abgekuppelten Zustand des Kuppelelements nach außen hin abgedichtet ist. Damit wird vermieden, dass Verunreinigungen in den Faltenbalg eindringen können, die später zu einem erhöhten Verschleiß zwischen der Oberfläche des Kugelabschnitts und einer an dieser anliegenden Innenfläche des Kuppelelements führen können.

Es kann vorgesehen sein, dass der kugelseitige Anschluss des Faltenbalgs derart ausgebildet ist, dass er im mit der Kupplungskugel gekuppelten Zustand des Kuppelelements vom Kugelabschnitt abgehoben ist. Hierdurch wird das Innere des Faltenbalgs zum Kuppelelement hin freigegeben, sodass Schmiermittel, wie zum Beispiel Schmierfett, aus dem Inneren des Faltenbalgs austreten kann und zwischen eine Oberfläche des Kugelabschnitts des Kupplungskugel und eine Innenfläche des Kuppelelements eindringen kann, um diese Flächen zu schmieren und Verschleiß zu reduzieren.

Der Faltenbalg kann in Richtung der Längsachse elastisch federnd ausgebildet sein, sodass der kugelseitige Anschluss des Faltenbalgs im mit der Kupplungskugel gekuppelten Zustand des Kuppelelements an dem Kuppelelement mit Vorspannung dichtend anliegt. Dies ist durch die axiale Vorspannung auch dann gewährleistet, wenn das Kuppelelement gegenüber der Kupplungskugel verkippt wird, sodass das Kupplungselements den Faltenbalg über den Umfang um die Längsachse betrachtet unterschiedlich stark komprimiert.

Die axiale Vorspannung kann in einigen Ausführungsbeispielen auch dafür sorgen, dass der Faltenbalg, im von der Kupplungskugel abgekuppelten Zustand des Kuppelelements, am Kugelabschnitt mit Vorspannung dichtend anliegt.

Somit ist stets eine sichere Anlage des kugelseitigen Anschlusses des Faltenbalgs an das Kuppelelement und an den Kugelabschnitt gewährleistet.

Zwischen dem Faltenbalg und der Kupplungskugel kann ein Aufnahmeraum für Schmiermittel gebildet sein.

Im von der Kupplungskugel abgekuppelten Zustand des Kuppelelements ist der kugelseitige Anschluss des Faltenbalgs auf einem Umfang des Kugelabschnitts in Anlage, der auf einem Kugeläquator auf einer Oberfläche des Kugelabschnitts oder in Richtung zum Schulterabschnitt axial beabstandet zum Kugeläquator angeordnet ist, wobei der Kugeläquator in einer Ebene an einem größten Durchmesser des Kugelabschnitts liegt, wobei die Ebene den Mittelpunkt des Kugelabschnitts beinhaltet und zum Beispiel senkrecht zur Längsachse angeordnet sein kann. Der Kugeläquator kann auch in einer Ebene angeordnet sein, die in einem von einem rechten Winkel abweichenden Winkel zur Längsachse angeordnet ist. Der Umfang, an dem der Faltenbalg in Anlage zur Oberfläche des Kugelabschnitts ist, kann auf einer Ebene liegen oder auch von einer Ebene abweichen und beliebig kurvig verlaufen, zum Beispiel auf einer gekrümmten Ebene liegen oder wellenförmig über den Umfang verlaufen.

Der Kugeläquator ist ein Kreis auf der Oberfläche des Kugelabschnitts, dort, wo der Kugelabschnitt seinen größten Durchmesser aufweist. Hierbei weist der Kugelabschnitt eine zumindest teilweise sphärische Oberfläche auf, die den Mittelpunkt definiert.

Bei einer Ausführungsform der Kupplungsanordnung weist der Schulterabschnitt im Übergang zum Kugelabschnitt der Kupplungskugel einen konkav ausgebildeten Kugelhals auf, an dem der schulterseitige Anschluss des Faltenbalgs dichtend anliegt. Der schulterseitige Anschluss des Faltenbalgs kann hierbei mit einem Fixierband am Kugelhals gesichert sein.

Gemäß einer beispielhaften Ausführungsform kann vorgesehen sein, dass der kugelseitige Anschluss des Faltenbalgs eine umlaufende Dichtkante oder -zone aufweist, mit der der kugelseitige Anschluss, im von der Kupplungskugel abgekuppelten Zustand des Kuppelelements, am Kugelabschnitt dichtend anliegt.

Der kugelseitige Anschluss des Faltenbalgs kann ausgehend von der Dichtkante oder -zone einen radial nach außen vorstehenden Ringabschnitt aufweisen, der derart ausgebildet ist, dass er, im mit der Kupplungskugel gekuppelten Zustand des Kuppelelements, am Kuppelelement anliegt.

Der Ringabschnitt kann derart gestaltet sein, dass er, zumindest im von der Kupplungskugel abgekuppelten Zustand des Kuppelelements, ausgehend von der Dichtkante oder -zone einen ringförmigen Abschnitt aufweist, der sich im Verlauf von radial innen nach radial außen dem schulterseitigen Anschluss in axialer Richtung annähert. Die Dichtkante oder -zone bildet eine Öffnung, die in einer Ebene angeordnet ist. Die Ebene kann senkrecht zur Längsachse angeordnet sein, so dass sich der ringförmige Abschnitt in einer Richtung parallel zur Längsachse dem schulterseitigen Anschluss annähert.

Die Ebene kann auch in einem von einem rechten Winkel abweichenden Winkel zur Längsachse angeordnet sein. Der ringförmige Abschnitt kann dabei derart gestaltet sein, dass dieser sich im Verlauf von radial innen nach radial außen bezogen auf eine Mittelachse der Öffnung von dieser Ebene in Richtung zum schulterseitigen Anschluss entfernt.

Somit wird im von der Kupplungskugel abgekuppelten Zustand des Kuppelelements, in dem der Faltenbalg mit der Dichtkante oder -zone in Anlage zum Kugelabschnitt der Kupplungskugel ist, eventuell auf den Kugelabschnitt auftreffendes Wasser, wie zum Beispiel Reinigungswasser oder Regen, von der Dichtkante oder -zone radial nach außen weggeleitet. Dies ist insbesondere beim Kuppeln des Kuppelelements von Bedeutung, um zu verhindern, dass beim Kuppeln Wasser in das Innere des Faltenbalgs gelangt.

Ferner kann sich an diesen inneren ringförmigen Abschnitt ein äußerer ringförmiger Abschnitt radial außen anschließen, der sich, zumindest im von der Kupplungskugel abgekuppelten Zustand des Kuppelelements, in einem Verlauf von radial innen nach radial außen vom schulterseitigen Anschluss in axialer Richtung entfernt.

Im oder am Ringabschnitt können, zumindest über einen Teilbereich, magnetische Elemente ein- bzw. aufgebracht sein. Somit wird der Ringabschnitt beim Ankuppeln des Kuppelelements, das üblicherweise aus einem ferromagnetischen Werkstoff hergestellt ist, über Magnetkraft am Kuppelelement sicher gehalten. Zudem ergibt sich eine flächige Anlage des Ringabschnitts an dem Kuppelelement, um die Dichtwirkung zu erhöhen. Bei den magnetischen Elementen kann es sich um magnetische Partikel, kleine Magnete oder einen Magnetring handeln.

In einer Ausführungsform ist der kugelseitige Anschluss des Faltenbalgs derart ausgebildet, dass, im mit der Kupplungskugel gekuppelten Zustand des Kuppelelements, die Dichtkante oder -zone in eine Kupplungsausnehmung des Kuppelelements zumindest teilweise axial eintaucht. Hierdurch wird eine längere axiale Erstreckung für Falten des Faltenbalgs ermöglicht. Der eintauchende Teil kann zumindest teilweise der innere ringförmige Abschnitt des Ringabschnitts sein. Zumindest der äußere ringförmige liegt dann flächig am Kupplungselement an. Dieser ist so breit in radialer Richtung ausgestaltet, dass dieser auch bei einer Abwinklung des Kupplungselements gegenüber der Kupplungskugel sicher an diesem anliegt.

Das Kuppelelement kann eine Kugelkalotte sein, wobei die Kupplungskugel ausgebildet ist, an einem ersten Fahrzeug, zum Beispiel einem Zugfahrzeug wie etwa einem Traktor, befestigt zu werden, und die Kugelkalotte ausgebildet ist, an einem zweiten Fahrzeug, zum Beispiel einem Anhänger, befestigt zu werden. Das Kuppelelement kann auch eine Abdeckkappe zum Schutz des Kugelabschnitts der Kugelkalotte sein. Somit kann einerseits die Kugelkalotte mit der Kupplungskugel gekuppelt werden. Andererseits kann in einem von der Kupplungskugel abgekuppelten Zustand der Kugelkalotte auch die Abdeckkappe mit der Kupplungskugel gekuppelt werden bzw. auf den Kugelabschnitt der Kupplungskugel aufgesteckt werden, um die Oberfläche des Kugelabschnitts vor äußeren Einflüssen zu schützen.

Eine beispielhafte Ausführungsform eines Kupplungsanordnung ist in den Figuren näher erläutert. Hierin zeigt
- Figur 1: einen Längsschnitt durch eine Kupplungsanordnung mit an der Kupplungskugel gekuppeltem Kuppelelement in Form einer Kugelkalotte,
- Figur 2: die Kupplungsanordnung gemäß Figur 1 mit gegenüber der Kupplungskugel gekipptem Kuppelelement,
- Figur 3: die Kupplungsanordnung gemäß Figur 1, wobei das Kuppelelement von der Kupplungskugel abgekuppelt ist, mit einer ersten Ausführungsform eines Faltenbalgs,
- Figur 4: die Kupplungsanordnung gemäß Figur 1, wobei das Kuppelelement von der Kupplungskugel abgekuppelt ist, mit einer zweiten Ausführungsform eines Faltenbalgs,
- Figur 5: die Kupplungsanordnung gemäß Figur 1, wobei das Kuppelelement von der Kupplungskugel abgekuppelt ist, mit einer dritten Ausführungsform eines Faltenbalgs,
- Figur 6: die Kupplungsanordnung gemäß Figur 1, wobei das Kuppelelement von der Kupplungskugel abgekuppelt ist, mit einer vierten Ausführungsform eines Faltenbalgs,
- Figur 7: einen Längsschnitt durch einen Faltenbalg gemäß einer der vorhergehenden Figuren und
- Figur 8: die Kupplungsanordnung gemäß Figur 1, wobei ein Kuppelelement in Form einer Abdeckkappe auf die Kupplungskugel aufgesetzt ist.

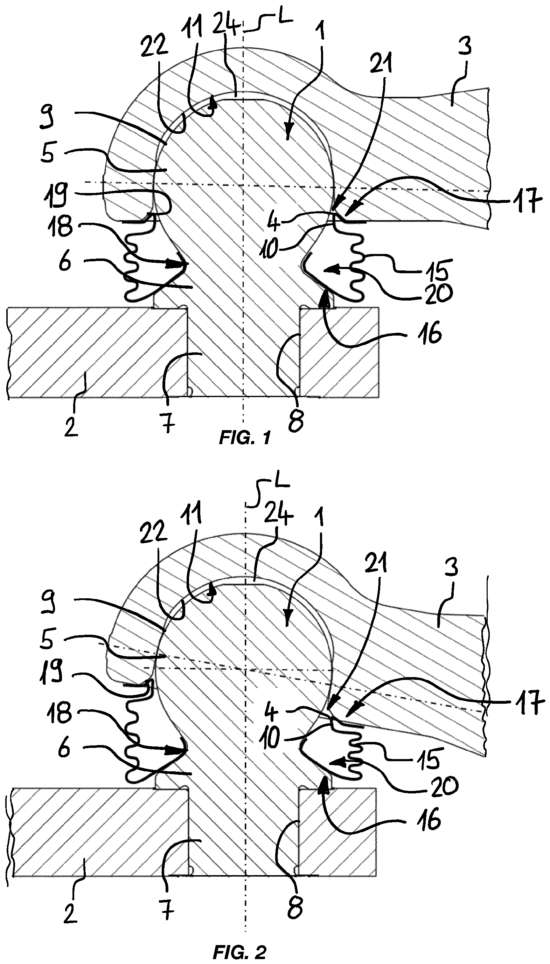

Figur 1 zeigt eine Kupplungsanordnung mit einer Kupplungskugel 1, die mit einem Kugelträger 2 verbunden ist. Der Kugelträger 2 lässt sich an einem ersten Fahrzeug, zum Beispiel ein Zugfahrzeug bzw. Traktor, befestigen. Mit der Kupplungskugel 1 ist ein Kuppelelement in Form einer Kugelkalotte 3 gekuppelt, wobei die Kugelkalotte 3 mittels eines (hier nicht dargestellten) Niederhalters auf der Kupplungskugel 1 gesichert sein kann. Die Kugelkalotte 3 kann mit einem zweiten Fahrzeug, zum Beispiel einem Anhänger, verbunden werden. Somit lässt sich ein Anhänger mittels der Kupplungsanordnung mit einem Zugfahrzeug verbinden, um von diesem gezogen werden zu können.

Die Kupplungskugel 1 umfasst einen Kugelabschnitt 5, einen Schulterabschnitt 6 und einen Verbindungsabschnitt 7, die in dieser Reihenfolge entlang einer Längsachse L zentriert zueinander angeordnet sind. Im dargestellten Ausführungsbeispiel ist die gesamte Kupplungskugel 1 einstückig ausgebildet. Die Kupplungskugel 1 kann jedoch auch aus einzelnen Bestandteilen zusammengesetzt sein.

Der Verbindungsabschnitt 7 ist als Zapfen gestaltet und in einer Bohrung 8 des Kugelträgers 2 aufgenommen. Der Verbindungsabschnitt 7 kann beliebig in der Bohrung 8 gesichert sein. Zum Beispiel kann der Verbindungsabschnitt 7 ein Außengewinde aufweisen, das in ein Innengewinde der Bohrung 8 eingeschraubt ist. Es ist auch denkbar, dass ein freies Ende mit einem Gewindeabschnitt (nicht dargestellt) versehen ist, der auf einer vom Kugelabschnitt 5 abgewandten Seite des Kugelträgers 2 aus der Bohrung 8 herausragt. Auf den Gewindeabschnitt kann eine Gewindemutter aufgeschraubt sein, wodurch die Kupplungskugel 1 am Kugelträger 2 befestigt wird.

Die Kugelkalotte 3 weist eine Kupplungsausnehmung 11 auf, mit der die Kugelkalotte 3 auf dem Kugelabschnitt 5 der Kupplungskugel 1 aufgelegt ist, sodass der Kugelabschnitt 5 teilweise in der Kupplungsausnehmung 11 aufgenommen ist. Die Kupplungsausnehmung 11 ist im Wesentlichen sphärisch ausgebildet und im Durchmesser an den Außendurchmesser des Kugelabschnitts 5 angepasst.

Um die Kupplungskugel 1 ist ein Faltenbalg 15 angeordnet, der hülsenartig gestaltet ist, sodass die Kupplungskugel 1 in Richtung der Längsachse L den Faltenbalg 15 vollständig durchdringt. Der Faltenbalg 15 weist einen schulterseitigen Anschluss 16 auf, der an dem Schulterabschnitt 6 der Kupplungskugel 1 dichtend anliegt. Alternativ oder zusätzlich kann der schulterseitige Anschluss 16 axial auch an dem Kugelträger 2, an dem die Kupplungskugel 1 befestigt ist, dichtend anliegen (nicht dargestellt).

Im dargestellten Ausführungsbeispiel ist im Übergang vom Schulterabschnitt 6 zum Kugelabschnitt 5 der Kupplungskugel 1 ein konkaver Kugelhals 18 am Schulterabschnitt 6 ausgebildet, an dem der schulterseitige Anschluss 16 des Faltenbalgs 15 dichtend anliegt. Der schulterseitige Anschluss 16 weist in diesem Bereich einen kleinsten Durchmesser auf. Hierbei kann der schulterseitige Anschluss 16 zumindest im Bereich des Kugelhalses 18 radial elastisch aufgeweitet sein, sodass dieser fest am Kugelhals 18 sitzt und gegenüber diesem abgedichtet ist. Hierzu kann der Faltenbalg 15 aus einem elastischen Material, wie etwas Kautschuk oder elastischen Kunststoffmaterial, hergestellt sein.

Um den Faltenbalg 15 zusätzlich an der Kupplungskugel 1 zu sichern, kann der schulterseitige Anschluss 16 des Faltenbalgs 15 mit einem Fixierband 25 am Kugelhals 18 gesichert sein. Als Fixierband 25 kann zum Beispiel ein Kabelbinder, ein Spannband oder ein elastisches Band verwendet werden.

Der Faltenbalg 15 weist ferner einen kugelseitigen Anschluss 17 auf, mit dem der Faltenbalg 15, im mit der Kupplungskugel 1 gekuppelten Zustand der Kugelkalotte 3 gemäß Figur 1, mit der Kugelkalotte 3 dichtend in Anlage ist.

Zwischen dem Faltenbalg 15 und der Kupplungskugel 1 ist ein Aufnahmeraum 20 gebildet, der zur Aufnahme von Schmiermittel dienen kann. Der Aufnahmeraum 20 ist einerseits an einem ersten axialen Ende durch die dichtende Anlage des schulterseitigen Anschlusses 16 an dem Schulterabschnitt 6 der Kupplungskugel 1 abgedichtet und andererseits an einem zweiten axialen Ende durch die dichtende Anlage des kugelseitigen Anschlusses 17 gegen die Kugelkalotte 3 abgedichtet.

Im gezeigten Ausführungsbeispiel ist der kugelseitige Anschluss 17 nicht in Anlage zum Kugelabschnitt 5 der Kupplungskugel 1, wenn die Kugelkalotte 3 mit der Kupplungskugel 1 gekuppelt ist. Zwischen dem Faltenbalg 15 und dem Kugelabschnitt 5 der Kupplungskugel 1 ist ein umlaufender Ringspalt 21 gebildet, sodass Schmiermittel aus dem Hohlraum 20 durch den Ringspalt 21 in die Kupplungsausnehmung 11 gelangen kann. Somit kann der Bereich zwischen einer Innenfläche 22 der Kupplungsausnehmung 11 und einer Oberfläche 9 des Kugelabschnitts 5 der Kupplungskugel 1 zur Verschleißreduzierung geschmiert werden. Damit sich das Schmiermittel effektiv in der Kupplungsausnehmung 11 verteilen kann, sind in die Kupplungsausnehmung 11 Nuten 24 eingebracht.

Der Faltenbalg 15 ist zumindest in Richtung der Längsachse L federnd bzw. elastisch verformbar ausgebildet. Im mit der Kupplungskugel 1 gekuppelten Zustand der Kugelkalotte 3 gemäß Figur 1 ist der Faltenbalg 15 axial gestaucht. Somit ist der Faltenbalg 15 zwischen dem Schulterabschnitt 6 einerseits und der Kugelkalotte 3 andererseits axial vorgespannt angeordnet.

Figur 2 zeigt die auf der Kupplungskugel 1 gekuppelte Kugelkalotte 3 in einer gegenüber der in Figur 1 gezeigten Ausrichtung gekippten Ausrichtung. In dieser Stellung ist der Faltenbalg 15 über seinen Umfang unterschiedlich in axialer Richtung gestaucht. Durch die axiale Elastizität des Faltenbalgs 15 in Richtung der Längsachse L ist über den gesamten Umfang weiterhin eine sichere Anlage des kugelseitigen Anschlusses 17 gegen die Kugelkalotte 3 gewährleistet.

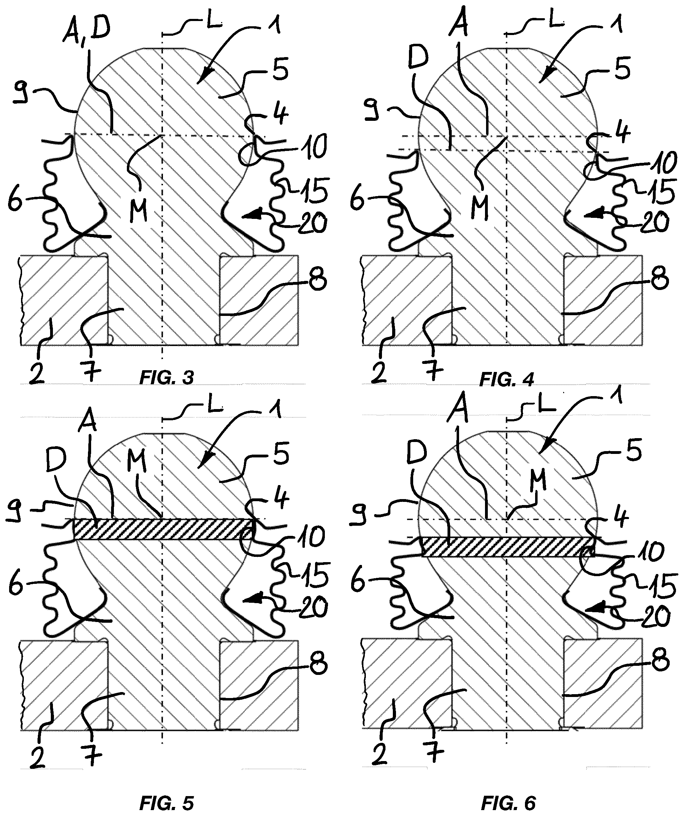

Im von der Kupplungskugel 1 abgekuppelten Zustand der Kugelkalotte 3 dehnt sich der Faltenbalg 15 axial aus, bis der kugelseitige Anschluss 17 in Anlage zum Kugelabschnitt 5 der Kupplungskugel 1 gelangt, wie dies in den Figuren 3 bis 6 dargestellt ist. Die Figuren 3 bis 6 zeigen unterschiedliche Ausführungsformen des Faltenbalgs 15, die in unterschiedlicher Art und Weise mit dem Kugelabschnitt 5 in Anlage gelangen.

Bei den in den Figuren 3 und 4 gezeigten Ausführungsformen weist der kugelseitige Anschluss 17 des Faltenbalgs 15 jeweils eine umlaufende Dichtkante 4 auf. Mit der Dichtkante 4 ist der kugelseitige Anschluss 17 des Faltenbalgs 15, im von der Kupplungskugel 1 abgekuppelten Zustand der Kugelkalotte 3, auf einem Dichtumfang D des Kugelabschnitts 5 in Anlage. Es entsteht ein Linienkontakt zwischen der Dichtkante 4 und der Oberfläche 9 des Kugelabschnitts 5, wobei selbstverständlich aufgrund des elastischen Materials des Faltenbalgs 15 der Linienkontakt eine von der Vorspannung abhängige Breite in axialer Richtung parallel zur Längsachse aufweist.

Bei der Ausführungsform gemäß Figur 3 liegt der Dichtumfang D auf einem Kugeläquator A auf der Oberfläche 9 des Kugelabschnitts 5. Der Kugeläquator A liegt in einer Ebene am größten Durchmesser des Kugelabschnitt 5. Anders ausgedrückt verläuft die Ebene durch den Mittelpunkt M des Kugelabschnitts 5. Im gezeigten Ausführungsbeispiel ist die Ebene senkrecht zur Längsachse L angeordnet. Um eine ausreichende Dichtwirkung zu erzielen, kann der kugelseitige Anschluss 17 des Faltenbalgs 15 im Bereich der Dichtkante 4 einen kleineren Durchmesser aufweisen, als der Kugelabschnitt 5 der Kupplungskugel 1, sodass der kugelseitige Anschluss 17 zumindest geringfügig radial aufgeweitet ist, um eine radiale Vorspannung der Dichtkante 4 auf der Oberfläche 9 des Kugelabschnitts 5 zu gewährleisten.

Bei der Ausführungsform gemäß Figur 4 ist der Dichtumfang D in Richtung zum Schulterabschnitt 6 der Kupplungskugel 1 axial beabstandet zum Kugeläquator A auf der Oberfläche 9 des Kugelabschnitts 5 angeordnet.

Hierbei kann der Faltenbalg 15 axial vorgespannt sein, sodass der kugelseitige Anschluss 17 des Faltenbalgs 15 mit Vorspannung gegen den Kugelabschnitt 5 der Kupplungskugel 1 gehalten ist.

Bei beiden Ausführungsformen gemäß Figur 3 und gemäß Figur 4 ist sichergestellt, dass der Aufnahmeraum 20 zwischen dem Faltenbalg 15 und der Kupplungskugel 1 nach außen hin vollständig abgedichtet ist. Somit wird vermieden, dass Schmutz oder Wasser von außen in den Aufnahmeraum 20 gelangt. Dies ist insbesondere dann von Bedeutung, wenn der Aufnahmeraum 20 als Reservoir für Schmiermittel dient.

Bei den in den Figuren 5 und 6 gezeigten Ausführungsformen weist der kugelseitige Anschluss 17 des Faltenbalgs 15 jeweils eine umlaufende Dichtzone 10 auf, die eine größere axiale Erstreckung aufweist als die Dichtkante der vorherigen Ausführungsformen. Der kugelseitige Anschluss 17 des Faltenbalgs 15 ist mit der Dichtzone 10, im von der Kupplungskugel 1 abgekuppelten Zustand der Kugelkalotte 3, flächig in einem um die Längsachse L umlaufenden Dichtbereich D des Kugelabschnitts 5 in Anlage. Der Dichtbereich D ist hierbei auf einer dem Schulterabschnitt 6 der Kupplungskugel 1 zugewandten Seite des Kugeläquators A angeordnet.

Bei der Ausführungsform gemäß Figur 5 grenzt der Dichtbereich D unmittelbar an den Kugeläquator an. Bei der Ausführungsform gemäß Figur 6 ist der Dichtbereich D vom Kugeläquator axial beabstandet angeordnet. In beiden Fällen kann der Faltenbalg 15 axial vorgespannt gegen die Oberfläche 9 des Kugelabschnitts 5 gehalten sein.

In allen gezeigten Ausführungsbeispielen schließt sich an die Dichtkante 4 oder Dichtzone 10 ein radial nach außen vorstehender Ringabschnitt 12 an. Der Ringabschnitt 12 ist, im mit der Kupplungskugel 1 gekuppelten Zustand der Kugelkalotte 3, dichtend in Anlage zur Kugelkalotte 3, wie dies insbesondere in den Figuren 1 und 2 gezeigt ist.

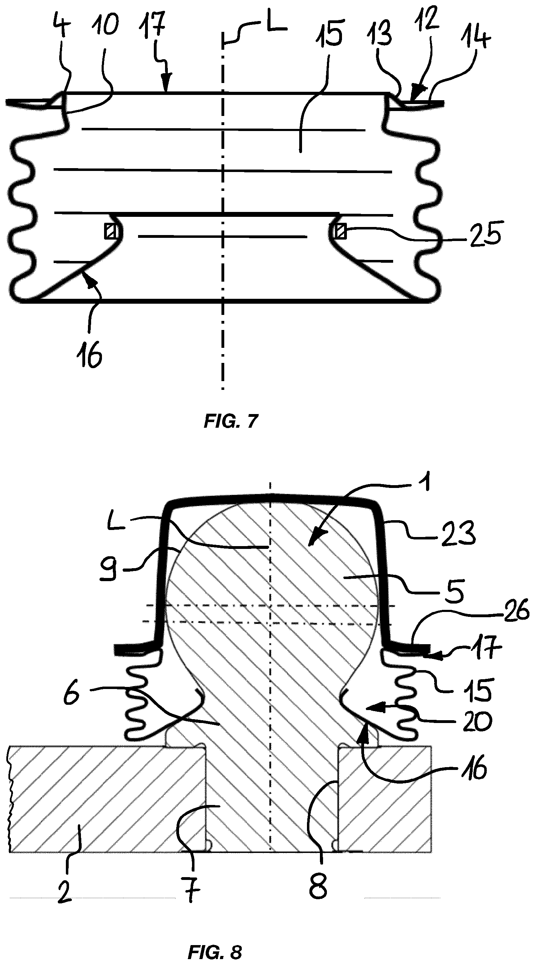

Wie insbesondere in Figur 7 gezeigt, weist der Ringabschnitt 12 ausgehend von der Dichtkante 4 oder Dichtzone 10 einen inneren ringförmigen Abschnitt 13 auf, der sich, im von der Kupplungskugel 1 abgekuppelten Zustand der Kugelkalotte 3, im Verlauf von radial innen nach radial außen dem schulterseitigen Anschluss 16 in axialer Richtung annähert. An den inneren ringförmigen Abschnitt 13 schließt sich radial außen ein äußerer ringförmiger Abschnitt 14 an, wobei sich dieser, von der Kupplungskugel 1 abgekuppelten Zustand der Kugelkalotte 3, radial von innen nach außen vom schulterseitigen Anschluss 16 entfernt.

Um den kugelseitigen Anschluss 17 noch sicherer an der Kugelkalotte 3 zu halten, können im oder am Ringabschnitt 12 magnetische Elemente ein- bzw. aufgebracht sein, wie zum Beispiel magnetische Partikel, kleine Magnete oder ein Magnetring. Hierdurch wird der Ringabschnitt 12 magnetisch an der Kugelkalotte 3 gehalten, die üblicherweise aus einem metallischen, insbesondere ferromagnetischen, Werkstoff hergestellt ist.

Der kugelseitige Anschluss 17 des Faltenbalgs 15 ist so gestaltet, dass dieser im Bereich der Dichtkante 4 oder Dichtzone 10 teilweise in die Kupplungsausnehmung 11 der Kugelkalotte 3 eintaucht. Im gezeigten Ausführungsbeispiel weist die Kupplungsausnehmung 11 der Kugelkalotte 3 hierzu in einem Kantenbereich einer Öffnung der Kupplungsausnehmung 11 eine umlaufende Fase 19 auf.

Wenn die Kugelkalotte 3 von der Kupplungskugel 1 abgekuppelt ist, kann der Kugelabschnitt 5 der Kupplungskugel 1 durch eine Abdeckkappe 23 geschützt sein, wie dies in Figur 8 dargestellt ist. Hierbei bildet die Abdeckkappe 23 das Kuppelelement. Die Abdeckkappe 23 weist an einem dem Faltenbalg 15 zugewandten Ende einen umlaufenden Kragen 26 auf, gegen den der kugelseitige Abschnitt 17 des Faltenbalgs 15 dichtend in Anlage ist.

### Bezugszeichenliste

- 1: Kupplungskugel
- 2: Kugelträger
- 3: Kugelkalotte
- 4: Dichtkante
- 5: Kugelabschnitt
- 6: Schulterabschnitt
- 7: Verbindungsabschnitt
- 8: Bohrung
- 9: Oberfläche
- 10: Dichtzone
- 11: Kupplungsausnehmung
- 12: Ringabschnitt
- 13: innerer ringförmiger Abschnitt
- 14: äußerer ringförmiger Abschnitt
- 15: Faltenbalg
- 16: schulterseitiger Anschluss
- 17: kugelseitiger Anschluss
- 18: Kugelhals
- 19: Fase
- 20: Aufnahmeraum
- 21: Ringspalt
- 22: Innenfläche
- 23: Abdeckkappe
- 24: Nut
- 25: Fixierband
- 26: Kragen

- A: Kugeläquator
- D: Dichtumfang, Dichtbereich
- L: Längsachse
- M: Mittelpunkt

## Patentansprüche

1. Kupplungsanordnung umfassend:
eine Kupplungskugel (1) mit einem Kugelabschnitt (5) und einem Schulterabschnitt (6), die entlang einer Längsachse (L) zentriert zueinander angeordnet sind,
einen Faltenbalg (15), der um die Kupplungskugel (1) angeordnet ist,
einen schulterseitigen Anschluss (16) des Faltenbalgs (15), der an dem Schulterabschnitt (6) der Kupplungskugel (1) und/oder an einem Kugelträger (2), an dem die Kupplungskugel (1) befestigt ist, dichtend anliegt, und
einen kugelseitigen Anschluss (17) des Faltenbalgs (15), der ausgebildet ist, um in einem mit der Kupplungskugel (1) gekuppelten Zustand eines Kuppelelements (3, 23) am Kuppelelement (3, 23) dichtend anzuliegen,
**dadurch gekennzeichnet,**
**dass** der kugelseitige Anschluss (17) des Faltenbalgs (15) in einem vom Kugelabschnitt (5) der Kupplungskugel (1) abgekuppelten Zustand des Kuppelelements (3, 23) am Kugelabschnitt (5) dichtend anliegt.

2. Kupplungsanordnung nach Anspruch 1,
**dadurch gekennzeichnet,**
**dass** der kugelseitige Anschluss (17) des Faltenbalgs (15) derart ausgebildet ist, dass dieser, im mit der Kupplungskugel (1) gekuppelten Zustand des Kuppelelements (3, 23), vom Kugelabschnitt (5) abgehoben ist.

3. Kupplungsanordnung nach Anspruch 1 oder 2,
**dadurch gekennzeichnet,**
**dass** der Faltenbalg (15) in Richtung der Längsachse (L) federnd ausgebildet ist.

4. Kupplungsanordnung nach einem der Ansprüche 1 bis 3,
**dadurch gekennzeichnet,**
**dass** zwischen dem Faltenbalg (15) und der Kupplungskugel (1) ein Aufnahmeraum (20) für Schmiermittel gebildet ist.

5. Kupplungsanordnung nach einem der Ansprüche 1 bis 4,
**dadurch gekennzeichnet,**
**dass** der kugelseitige Anschluss (17) des Faltenbalgs (15), im vom Kugelabschnitt (5) der Kupplungskugel (1) abgekuppelten Zustand des Kuppelelements (3, 23), auf einem Umfang (D) des Kugelabschnitts (5) in Anlage ist, der auf einem Kugeläquator (A) auf einer Oberfläche (9) des Kugelabschnitts (5) oder in Richtung zum Schulterabschnitt (6) axial beabstandet zum Kugeläquator (A) angeordnet ist, wobei der Kugeläquator (A) in einer Ebene liegt, die einen Mittelpunkt (M) des Kugelabschnitts (5) beinhaltet.

6. Kupplungsanordnung nach einem der Ansprüche 1 bis 5,
**dadurch gekennzeichnet,**
**dass** der Schulterabschnitt (6) im Übergang zum Kugelabschnitt (5) einen konkav ausgebildeten Kugelhals (18) aufweist, an dem der schulterseitige Anschluss (16) des Faltenbalgs (15) dichtend anliegt.

7. Kupplungsanordnung nach Anspruch 6,
**dadurch gekennzeichnet,**
**dass** der schulterseitige Anschluss (16) des Faltenbalgs (15) mit einem Fixierband (25) am Kugelhals (18) gesichert ist.

8. Kupplungsanordnung nach einem der Ansprüche 1 bis 7,
**dadurch gekennzeichnet,**
**dass** der kugelseitige Anschluss (17) des Faltenbalgs (15) eine umlaufende Dichtkante oder -zone (4, 10) aufweist, mit der der kugelseitige Anschluss (17), im von der Kupplungskugel (1) abgekuppelten Zustand des Kuppelelements (3, 23), am Kugelabschnitt (5) dichtend anliegt.

9. Kupplungsanordnung nach Anspruch 8,
**dadurch gekennzeichnet,**
**dass** der kugelseitige Anschluss (17) des Faltenbalgs (15) ausgehend von der Dichtkante oder -zone (4, 10) einen radial nach außen vorstehenden Ringabschnitt (12) aufweist, der derart ausgebildet ist, dass er, im mit der Kupplungskugel (1) gekuppelten Zustand des Kuppelelements (3, 23), am Kuppelelement (3, 23) anliegt.

10. Kupplungsanordnung nach Anspruch 9,
**dadurch gekennzeichnet,**
**dass** der Ringabschnitt (12) ausgehend von der Dichtkante oder -zone (4, 10) einen ringförmigen Abschnitt (13) aufweist, der sich im Verlauf von radial innen nach radial außen dem schulterseitigen Anschluss (16) in axialer Richtung annähert.

11. Kupplungsanordnung nach Anspruch 9 oder 10,
**dadurch gekennzeichnet,**
**dass** im oder am Ringabschnitt (12) magnetische Elemente ein- bzw. aufgebracht sind.

12. Kupplungsanordnung nach einem der Ansprüche 8 bis 11,
**dadurch gekennzeichnet,**
**dass** der kugelseitige Anschluss (17) des Faltenbalgs (15) ausgebildet ist, um im mit der Kupplungskugel (1) gekuppelten Zustand des Kuppelelements (3, 23) mit der Dichtkante oder -zone (4, 10) in eine Kupplungsausnehmung (11) des Kuppelelements (3, 23) einzutauchen.

13. Kupplungsanordnung nach einem der Ansprüche 1 bis 12,
**dadurch gekennzeichnet,**
**dass** das Kuppelelement eine Kugelkalotte (3) ist, wobei die Kupplungskugel (1) ausgebildet ist, an einem ersten Fahrzeug befestigt zu werden, und die Kugelkalotte (3) ausgebildet ist, an einem zweiten Fahrzeug befestigt zu werden.

14. Kupplungsanordnung nach einem der Ansprüche 1 bis 12,
**dadurch gekennzeichnet,**
**dass** das Kuppelelement eine Abdeckkappe (23) zum Schutz des Kugelabschnitts (5) der Kupplungskugel (1) ist.
